# EUROPEAN PATENT APPLICATION

(11) **EP 4 641 862 A1**
(43) Date of publication of application: **29.10.2025**
(21) Application number: 23932669.7
(22) Date of filing: 26.07.2023
(51) Int. Cl.: H02J 3/32, H02J 7/35, H02J 13/00, H02S 50/00

(54) **PHOTOVOLTAIC AND ENERGY STORAGE SYSTEM AND METHOD, AND ELECTRONIC DEVICE AND MEDIUM**

(30) Priority: 14.04.2023 CN 202310416073
(71) Applicant: Altenergy Power System Inc., Jiaxing, Zhejiang 314050 (CN)
(72) Inventor: ZHOU, Dongming, Jiaxing, Zhejiang 314050 (CN); HE, Yunyi, Jiaxing, Zhejiang 314050 (CN); WU, Guoliang, Jiaxing, Zhejiang 314050 (CN); LUO, Yuhao, Jiaxing, Zhejiang 314050 (CN)
(74) Representative: Müller Schupfner & Partner Patent- und Rechtsanwaltspartnerschaft mbB (Muc)
(86) International application number: PCT/CN2023/109263
(87) International publication number: WO 2024/212396

(57) **Abstract**

A photovoltaic and energy storage system and method, and an electronic device and a medium, which are applied to the field of energy storage. The photovoltaic and energy storage system provided in the present application comprises a photovoltaic assembly and a power grid, and further comprises: an inverter assembly, which is arranged between the photovoltaic assembly and the power grid, wherein the inverter assembly establishes a wireless communication connection with a preset intelligent device to acquire a first control instruction which is sent by the preset intelligent device and is used for controlling the power-on or power- off of an inverter in the inverter assembly; and a mobile power supply assembly, which is arranged between the photovoltaic assembly and the power grid and connected in parallel to the inverter assembly, wherein the mobile power supply assembly establishes a wireless communication connection with a preset communication device to acquire a second control instruction which is sent by the preset communication device and is used for controlling the charging or discharging of a mobile power supply in the mobile power supply assembly. By means of a wireless control instruction which is sent by a preset intelligent device or a preset communication device, an inverter and a mobile power supply can be charged and discharged regularly, thereby improving the user experience.

## Description

This application claims priority to Chinese Patent Application No. 202310416073.8 titled "PHOTOVOLTAIC AND ENERGY STORAGE SYSTEM AND METHOD, AND ELECTRONIC DEVICE AND MEDIUM", filed on April 14, 2023 with the China National Intellectual Property Administration, which is incorporated herein by reference in its entirety.

### FIELD

The present disclosure relates to the technical field of energy storage, and in particular to a photovoltaic and energy storage system, a photovoltaic energy storage method, an electronic device and a medium.

### BACKGROUND

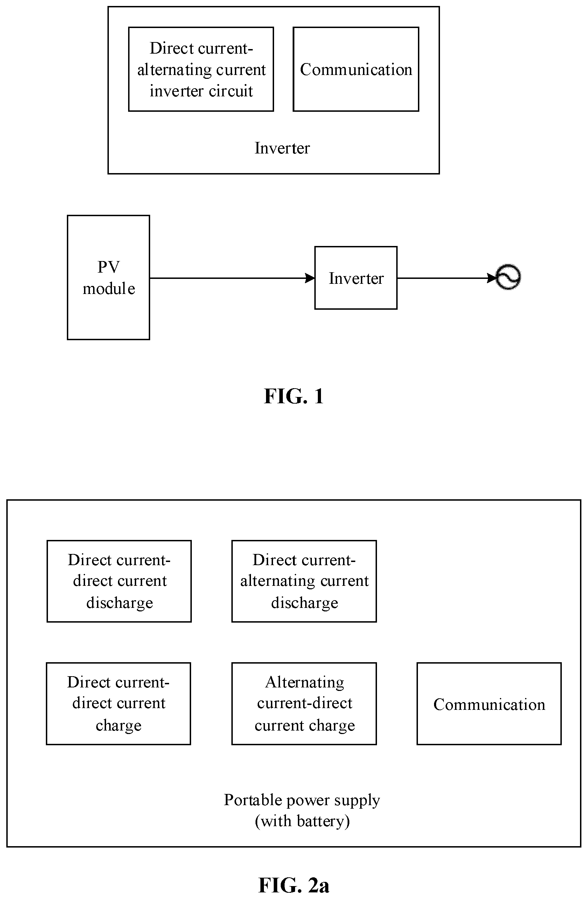

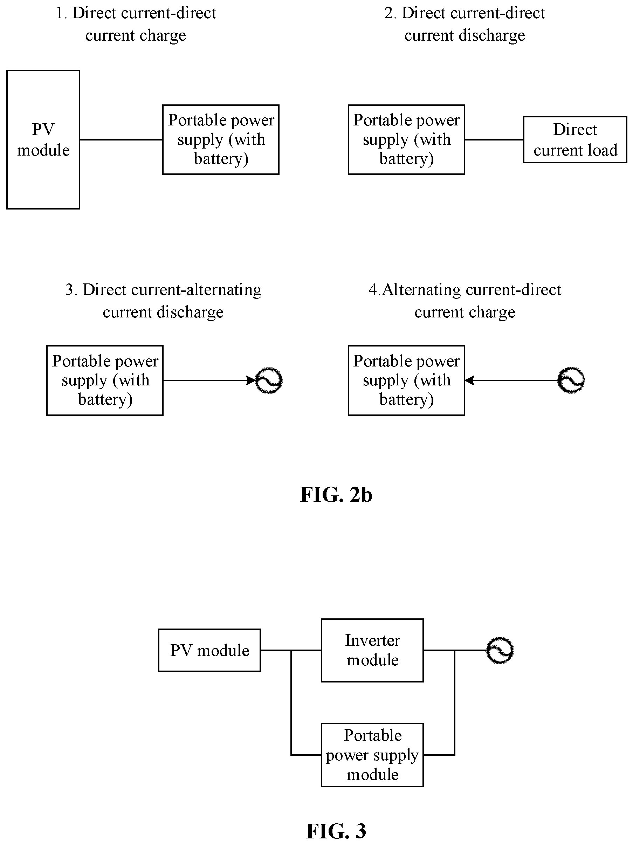

In recent years, micro photovoltaic and energy storage systems have been applied in daily life, such as on balconies or in backyards. A conventional micro photovoltaic and energy storage system typically adopts a low-power inverter to connect a photovoltaic module (PV module) to a power grid to achieve grid connection, while adopting a low-power, low-capacity portable power supply for independent energy storage. The inverter typically includes a direct current-alternating current inverter module and a communication module, as shown in FIG. 1. The portable power supply typically includes a direct current-direct current charging module, a direct current-direct current discharging module, a direct current-alternating current discharging module, an alternating current-direct current charging module and a communication module. The above modules operate in four modes, as shown in FIG. 2a and FIG. 2b. The conventional photovoltaic and energy storage system operates only in either charging or discharging mode at any given time based on connections, lacking the capability of scheduled charging and discharging based on user requirements.

In view of the above, how to develop a new photovoltaic and energy storage system is a technical problem to be solved urgently by those skilled in the art.

### SUMMARY

A photovoltaic and energy storage system, a photovoltaic energy storage method, an electronic device and a medium are provided according to the present disclosure, to achieve scheduled charging and discharging based on user requirements.

To solve the above technical problem, a photovoltaic and energy storage system is provided according to the present disclosure. The photovoltaic and energy storage system includes a photovoltaic module and a power grid and further includes:
an inverter module, arranged between the photovoltaic module and the power grid, where the inverter module is in wireless communication connection with a preconfigured intelligent apparatus and is configured to obtain a first control instruction sent by the preconfigured intelligent apparatus; and the first control instruction is to control an inverter in the inverter module to be energized or de-energized; and
a portable power supply module, arranged between the photovoltaic module and the power grid and connected in parallel to the inverter module, where the portable power supply module is in wireless communication connection with a preconfigured communication device and is configured to obtain a second control instruction sent by the preconfigured communication device; and the second control instruction is to control a portable power supply in the portable power supply module to charge or discharge.

In an embodiment, the inverter module includes the inverter and further includes a first intelligent switch.

A terminal of the first intelligent switch is connected to an output terminal of the photovoltaic module, and another terminal of the first intelligent switch is connected to an input terminal of the inverter; and the first intelligent switch is in wireless communication connection with the preconfigured intelligent apparatus. The first intelligent switch is configured to: obtain the first control instruction sent by the preconfigured intelligent apparatus; connect, in response to the first control instruction, the photovoltaic module to the inverter; and disconnect, in response to the first control instruction, the photovoltaic module from the inverter.

In an embodiment, the portable power supply module includes the portable power supply and further includes a second intelligent switch.

A terminal of the second intelligent switch is connected to an output terminal of the photovoltaic module, and another terminal of the second intelligent switch is connected to an input terminal of the portable power supply; and the second intelligent switch is in wireless communication connection with the preconfigured communication device. The second intelligent switch is configured to obtain the second control instruction sent by the preconfigured communication device; connect, in response to the second control instruction, the photovoltaic module to the portable power supply; and disconnect, in response to the second control instruction, the photovoltaic module from the portable power supply. The preconfigured communication device is arranged in the preconfigured intelligent apparatus.

In an embodiment, the photovoltaic and energy storage system further includes a third intelligent switch.

A terminal of the third intelligent switch is connected to an output terminal of the inverter and an output terminal of the portable power supply, and another terminal of the third intelligent switch is connected to an input terminal of the power grid; and the third intelligent switch is in wireless communication connection with the preconfigured intelligent apparatus. The third intelligent switch is configured to obtain a third control instruction sent by the preconfigured intelligent apparatus; connect, in response to the third control instruction, the inverter and the portable power supply to the power grid; and disconnect, in response to the third control instruction, the inverter and the portable power supply from the power grid.

In an embodiment, the inverter module includes the inverter arranged between the photovoltaic module and the power grid.

The inverter is in wireless communication connection with the preconfigured intelligent apparatus, and is configured to: obtain a first control instruction sent by the preconfigured intelligent apparatus, where the inverter is controlled, in response to the first control instruction, to be energized or de-energized.

In an embodiment, the portable power supply module includes the portable power supply arranged between the photovoltaic module and the power grid.

The portable power supply is in wireless communication connection with the preconfigured communication device in the preconfigured intelligent apparatus, and is configured to: obtain the second control instruction sent by the preconfigured intelligent apparatus through the preconfigured communication device, where the portable power supply is controlled, in response to the second control instruction, to charge or discharge.

In an embodiment, the portable power supply module includes the portable power supply arranged between the photovoltaic module and the power grid.

The portable power supply is in wireless communication connection with the preconfigured communication device in the inverter, and is configured to: obtain the second control instruction sent by the preconfigured intelligent apparatus and forwarded by the inverter, where the portable power supply is controlled, in response to the second control instruction, to charge or discharge.

To solve the above problem, a photovoltaic energy storage method is further provided according to the present disclosure, is applied to the photovoltaic and energy storage system, and includes:
obtaining, by the inverter module in the photovoltaic and energy storage system, a first control instruction sent by the preconfigured intelligent apparatus; and energizing or de-energizing, in response to the first control instruction, the inverter in the inverter module; and
obtaining, by the portable power supply module in the photovoltaic and energy storage system, a second control instruction sent by the preconfigured communication device; and charging or discharging, in response to the second control instruction, the portable power supply in the portable power supply module.

To solve the above problem, an electronic device is further provided according to the present disclosure. The electronic device includes:
a memory, configured to store a computer program; and a processor, configured to perform, when executing the computer program, the photovoltaic energy storage method described above.

To solve the above problem, a computer-readable storage medium is further provided according to the present disclosure. The computer-readable storage medium stores a computer program. The computer program, when executed by a processor, performs the photovoltaic energy storage method described above.

A photovoltaic and energy storage system is provided according to the present disclosure. The photovoltaic and energy storage system includes a photovoltaic module and a power grid. The photovoltaic and energy storage system further includes: an inverter module arranged between the photovoltaic module and the power grid, where the inverter module is in wireless communication connection with a preconfigured intelligent apparatus and is configured to obtain a first control instruction sent by the preconfigured intelligent apparatus, and the first control instruction is to control an inverter in the inverter module to be energized or de-energized; and a portable power supply module arranged between the photovoltaic module and the power grid and connected in parallel to the inverter module, where the portable power supply module is in wireless communication connection with a preconfigured communication device and is configured to obtain a second control instruction sent by the preconfigured communication device; and the second control instruction is to control a portable power supply in the portable power supply module to charge and discharge. By means of the wireless control instruction sent by the preconfigured intelligent apparatus or the preconfigured communication device, the scheduled charging and discharging of the inverter and the portable power supply can be achieved, improving user experience.

### BRIEF DESCRIPTION OF THE DRAWINGS

Hereinafter drawings to be applied in embodiments are briefly described, in order to clarify illustration of technical solutions according to embodiments of the present disclosure. Apparently, the drawings in the following descriptions are only some embodiments of the present disclosure, and other drawings may be obtained by those skilled in the art based on the drawings without exerting creative efforts.
FIG. 1 is a diagram showing modules of an inverter according to an embodiment of the present disclosure;
FIG. 2a is a diagram showing modules of a portable power supply according to an embodiment of the present disclosure;
FIG. 2b is a structural diagram of a photovoltaic and energy storage system according to an embodiment of the present disclosure;
FIG. 3 is a structural diagram of a photovoltaic and energy storage system according to an embodiment of the present disclosure;
FIG. 4 is a schematic diagram showing an overall structure of a photovoltaic and energy storage system according to an embodiment of the present disclosure;
FIG. 5 is a schematic diagram showing an overall structure of a photovoltaic and energy storage system according to an embodiment of the present disclosure;
FIG. 6 is a schematic diagram showing an overall structure of a photovoltaic and energy storage system according to an embodiment of the present disclosure;
FIG. 7 is a schematic diagram showing an overall structure of a photovoltaic and energy storage system according to an embodiment of the present disclosure;
FIG. 8 is a flowchart of a photovoltaic energy storage method according to another embodiment of the present disclosure;
FIG. 9 is a flowchart of a photovoltaic energy storage method according to another embodiment of the present disclosure; and
FIG. 10 is a structural diagram of an electronic device according to another embodiment of the present disclosure.

### DETAILED DESCRIPTION

Technical solutions according to the embodiments of the present disclosure are described clearly and completely as follows in conjunction with the drawings in the embodiments of the present disclosure. It is apparent that the described embodiments are only a part of the embodiments according to the present disclosure, rather than all of the embodiments. Any other embodiments obtained by those skilled in the art based on the embodiments of the present disclosure without any creative effort fall within the protection scope of the present disclosure.

A photovoltaic and energy storage system, a photovoltaic energy storage method, an electronic device and a medium are provided according to the present disclosure.

To enable those skilled in the art to better understand the solutions of the present disclosure, the present disclosure is described in further detail below with reference to the drawings and the embodiments.

FIG. 3 is a structural diagram of a photovoltaic and energy storage system according to an embodiment of the present disclosure. As shown in FIG. 3, the photovoltaic and energy storage system includes a photovoltaic module and a power grid. The photovoltaic and energy storage system further includes an inverter module and a portable power supply module.

The inverter module is arranged between the photovoltaic module and the power grid. The inverter module is in wireless communication connection with a preconfigured intelligent apparatus and is configured to obtain a first control instruction sent by the preconfigured intelligent apparatus. The first control instruction is to control an inverter in the inverter module to be energized or de-energized.

The portable power supply module is arranged between the photovoltaic module and the power grid and is connected in parallel to the inverter module. The portable power supply module is in wireless communication connection with a preconfigured communication device, and is configured to obtain a second control instruction sent by the preconfigured communication device. The second control instruction is to control a portable power supply in the portable power supply module to charge and discharge.

The photovoltaic module is a solar cell module (PV module). An output voltage of a single solar cell is low, and an unencapsulated cell is prone to electrode detachment due to environmental impacts. Therefore, a certain number of cells should be connected in series or parallel and are encapsulated into the photovoltaic module, thereby avoiding corrosion of electrodes of the cells and wires between the cells. The power grid refers to a collective term of facilities and devices that connect power generation and power consumption in a power system. The power grid functions as an intermediate link for transmitting and distributing power. The power grid is mainly composed of transmission lines, substations, distribution stations and distribution lines, which are interconnected to each other. Generally, the power network refers to an integrated system composed of power transmission, substation, and distribution devices along with their auxiliary systems, which connects power generation with power consumption. This system is collectively termed the Power Network, also known as the power grid. The inverter module includes an inverter, and other components in the inverter module are not limited in the present disclosure. The inverter is configured to convert direct-current power (in a battery or a storage battery) into alternating-current power (generally sine waves at 220V and 50Hz). The inverter includes an inverter bridge, a control circuit and a filtering circuit. The inverter may be categorized by wave characteristics or source characteristics. The inverter is characterized by high conversion efficiency, fast startup, safety, good physical performance, and high load adaptability and stability. The portable power supply module includes a portable power supply, and other components in the portable power supply module are not limited in the present disclosure. The portable power supply is a portable charger that integrates power supply and charging functions. Generally, a lithium-ion battery serves as power storage carrier. A commonly used portable power supply includes a battery (pack), a protection circuit board, a housing packaging material, a thermal-sensitive component, PTC and the like.

It should be noted that a direct-current power supply may be a PV module or a wind turbine, which is not limited in the present disclosure.

In an embodiment, the inverter module is arranged between the photovoltaic module (PV module) and the power grid and is connected in parallel to the portable power supply module. The inverter module is in wireless communication connection with the preconfigured intelligent apparatus, and obtains a first control instruction sent by the preconfigured intelligent apparatus. The first control instruction is to control the inverter in the inverter module to be energized or de-energized. Similarly, the portable power supply module is also in wireless communication connection with the preconfigured communication device, and obtains a second control instruction sent by the preconfigured communication device. The second control instruction is to control the portable power supply in the portable power supply module to charge or discharge.

It should be noted that the preconfigured intelligent apparatus may be a mobile terminal such as a mobile phone or a computer, which is not limited in the present disclosure and may be configured based on user requirements.

It should be further noted that the preconfigured intelligent apparatus may include the preconfigured communication device, or the like, and further include another device capable of wireless communication, such as an inverter that can be connected to the preconfigured intelligent apparatus, which is not limited in the present disclosure and may be configured based on user requirements.

A photovoltaic and energy storage system is provided according to the present disclosure. The photovoltaic and energy storage system includes a photovoltaic module and a power grid. The photovoltaic and energy storage system further includes: an inverter module arranged between the photovoltaic module and the power grid, and a portable power supply module arranged between the photovoltaic module and the power grid. The inverter module is in wireless communication connection with a preconfigured intelligent apparatus and is configured to obtain a first control instruction sent by the preconfigured intelligent apparatus, and the first control instruction is to control an inverter in the inverter module to be energized or de-energized. The portable power supply module is in wireless communication connection with a preconfigured communication device and is configured to obtain a second control instruction sent by the preconfigured communication device, and the second control instruction is to control a portable power supply in the portable power supply module to charge and discharge. By means of the wireless control instruction sent by the preconfigured intelligent apparatus or the preconfigured communication device, the scheduled charging and discharging of the inverter and the portable power supply can be achieved, improving user experience.

On basis of the above embodiment, in a preferred embodiment, the inverter module includes the inverter, and further includes a first intelligent switch.

A terminal of the first intelligent switch is connected to an output terminal of the photovoltaic module, and another terminal of the first intelligent switch is connected to an input terminal of the inverter. The first intelligent switch is in wireless communication connection with the preconfigured intelligent apparatus. The first intelligent switch is configured to obtain the first control instruction sent by the preconfigured intelligent apparatus; connect, in response to the first control instruction, the photovoltaic module to the inverter; and disconnect, in response to the first control instruction, the photovoltaic module from the inverter.

In an embodiment, the inverter module includes the inverter and the first intelligent switch. The first intelligent switch is connected with the photovoltaic module and the inverter. The first intelligent switch is in wireless communication connection with the preconfigured intelligent apparatus, obtains a first control instruction, and is turned on or off in response to the first control instruction. In this way, the photovoltaic module can be connected to or disconnected from the inverter, thereby achieving energizing or de-energizing of the inverter.

An intelligent switch refers to a unit for intelligently closing or opening a circuit by using a combination of a programmed control board and an electronic component, for wireless communication by using a communication module, and for achieving self-control by using a control module.

It should be noted that the first intelligent switch in the above embodiment is only an implementation, which is not limited in the embodiments of the present disclosure. A device with the same function as the first intelligent switch may be adopted, which is not limited in the present disclosure and may be configured based on user requirements.

In the embodiments of the present disclosure, the photovoltaic module is connected to or disconnected from the inverter by means of an intelligent switch, thus achieving energizing or de-energizing of the inverter, improving the efficiency, simplifying operations, achieving scheduled charging and discharging based on user requirements, and improving user experience.

On basis of the above embodiments, in a preferred embodiment, the portable power supply module includes the portable power supply, and further includes a second intelligent switch.

A terminal of the second intelligent switch is connected to an output terminal of the photovoltaic module, and another terminal of the second intelligent switch is connected to an input terminal of the portable power supply. The second intelligent switch is in wireless communication connection with a preconfigured communication device. The second intelligent switch is configured to obtain a second control instruction sent by the preconfigured communication device; connect, in response to the second control instruction, the photovoltaic module to the portable power supply; and disconnect, in response to the second control instruction, the photovoltaic module from the portable power supply. The preconfigured communication device is arranged in the preconfigured intelligent apparatus.

In an embodiment, the portable power supply module includes the portable power supply and the second intelligent switch. The second intelligent switch is connected with the photovoltaic module and the portable power supply. The second intelligent switch is in wireless communication connection with the preconfigured communication device, obtains a second control instruction, and is turned on or off in response to the second control instruction. In this way, the photovoltaic module can be connected to or disconnected from the portable power supply, thereby controlling the portable power supply to charge or discharge.

A structure of the second intelligent switch may be or may not be the same as that of the first intelligent switch as long as the second intelligent switch has the same communication and control functions as the first intelligent switch. The structure of the second intelligent switch is not limited in the present disclosure and may be configured based on user requirements.

The preconfigured communication device is arranged in the preconfigured intelligent apparatus, that is, the preconfigured intelligent apparatus includes the preconfigured communication device, but is not limited to the preconfigured communication device, as long as the preconfigured communication device is capable of wireless communication, for example, an inverter capable of wireless communication.

In the embodiment of the present disclosure, the photovoltaic module is connected to or disconnected from the portable power supply through an intelligent switch, achieving charging or discharging of the portable power supply, improving the efficiency, simplifying operations, achieving scheduled charging and discharging based on user requirements, thus improving user experience.

On basis of the above embodiments, in a preferred embodiment, the photovoltaic and energy storage system further includes a third intelligent switch.

A terminal of the third intelligent switch is connected to an output terminal of the inverter and an output terminal of the portable power supply, and another terminal of the third intelligent switch is connected to an input terminal of the power grid. The third intelligent switch is in wireless communication connection with the preconfigured intelligent apparatus, and is configured to obtain a third control instruction sent by the preconfigured intelligent apparatus; connect, in response to the third control instruction, the inverter and the portable power supply to the power grid; and disconnect, in response to the third control instruction, the inverter and the portable power supply from the power grid.

In the embodiment, the photovoltaic and energy storage system includes the power grid. The power grid is connected to the inverter and the portable power supply. The third intelligent switch is further arranged on a circuit for connecting the power grid to the inverter and the portable power supply. That is, a terminal of the third intelligent switch is connected to the inverter and the portable power supply, and another terminal of the third intelligent switch is connected to the power grid. The third intelligent switch is in wireless communication connection with the preconfigured intelligent apparatus, and is configured to obtain a third control instruction sent by the preconfigured intelligent apparatus; connect, in response to the third control instruction, the inverter and the portable power supply to the power grid; and disconnect, in response to the third control instruction, the inverter and the portable power supply from the power grid, thereby achieving energizing or de-energizing of the inverter and charging or discharging of the portable power supply.

In the embodiment of the present disclosure, circuits in the photovoltaic and energy storage system is closed or opened by means of intelligent switches, achieving charging or discharging of the portable power supply and energizing or de-energizing of the inverter, improving the efficiency, simplifying operations, achieving scheduled charging and discharging based on user requirements, thus improving user experience.

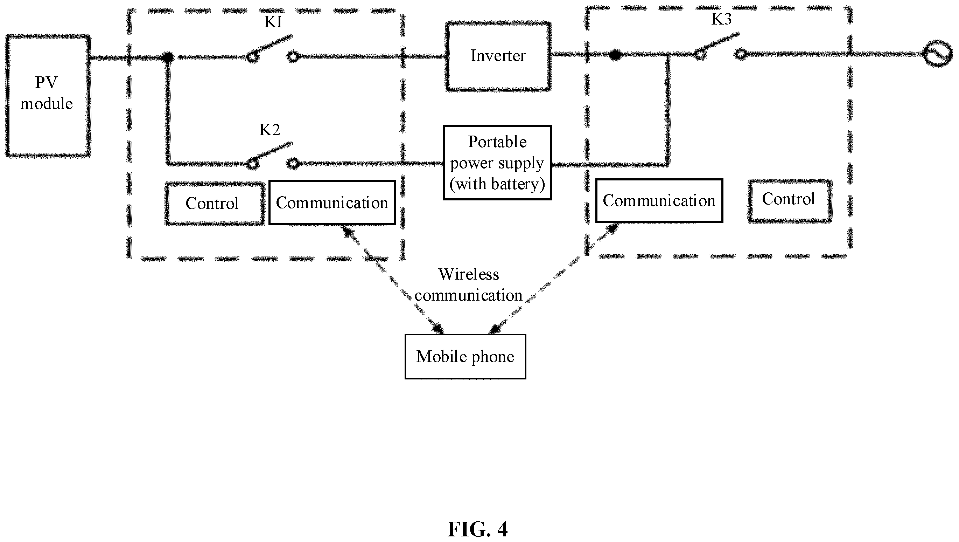

In the above embodiments of the present disclosure, the photovoltaic and energy storage system including the first intelligent switch, the second intelligent switch and the third intelligent switch operates in the modes described in table 1. FIG. 4 shows an overall structure of the photovoltaic and energy storage system.

**Table 1**

| No. | Operating Mode | K1 | K2 | K3 |
|---|---|---|---|---|
| 1 | Charging using photovoltaic surplus power | 1 | 1 | 1 |
| 2 | Surplus power discharging ( photovoltaic module does not operate) | 1 | 1 | 1 |
| 3 | Only inverter connected to power grid | 1 | 0 | 1 |
| 4 | Grid connection and alternating-current charging of portable power supply | 1 | 1 | 1 |
| 5 | Off-grid charging | 1 | 1 | 0 |
| 6 | Off-grid charging of portable power supply | 0 | 1 | 0 |
| 7 | Grid-connected charging of portable power supply | 0 | 1 | 1 |
| 8 | Hybrid mode | - | - | - |

The first intelligent switch is denoted as K1, the second intelligent switch is denoted as K2, and the third intelligent switch is denoted as K3. 1 represents that a switch is turned on and 0 represents that a switch is turned off.

Operating mode 1 (charging using photovoltaic surplus power): When the power generated by the photovoltaic module exceeds the power consumption of a load, a battery of the portable power supply is charged with the surplus power.

Operating mode 2 (surplus power discharging (photovoltaic module does not operate)): When the photovoltaic module does not operate, for example, at night, the portable power supply discharges through the inverter to supply power to the load.

Operating mode 3 (only inverter connected to power grid): The photovoltaic module is connected to a power grid only through the inverter, not through the portable power supply.

Operating mode 4 (grid connection and alternating-current charging of portable power supply): The photovoltaic module feeds power into the power grid through the inverter, and the portable power supply is charged by the alternating-current power grid.

Operating mode 5 (off-grid charging): In an off-grid state, the portable power supply is directly charged by the photovoltaic module and is charged by the alternating-current output of the inverter.

Operating mode 6 (off-grid charging of portable power supply): In an off-grid state, the photovoltaic module only directly charges the portable power supply.

Operating mode 7 (grid-connected charging of portable power supply): In a grid-connected state, the portable power supply may be charged by the photovoltaic module or by the alternate-current power grid.

Operating mode 8 (hybrid mode): This mode may be customized based on user requirements.

On basis of the above embodiments, in a preferred embodiment, the inverter module includes the inverter arranged between the photovoltaic module and the power grid.

The inverter is in wireless communication connection with the preconfigured intelligent apparatus, and is configured to: obtain a first control instruction sent by the preconfigured intelligent apparatus, where the inverter is controlled, in response to the first control instruction, to be energized or de-energized.

In an embodiment, the inverter module only includes the inverter, and the inverter is arranged between the photovoltaic module and the power grid. It should be noted that the inverter itself establishes wireless communication connection with the preconfigured intelligent apparatus, thus controlling the inverter to be energized or de-energized.

In the embodiment of the present disclosure, the inverter is in communication connection with the intelligent apparatus, without any auxiliary device, through a communication function of the inverter to realize control over a state of the inverter.

On basis of the above embodiments, in a preferred embodiment, the portable power supply module includes the portable power supply arranged between the photovoltaic module and the power grid.

The portable power supply is in wireless communication connection with the preconfigured communication device in the preconfigured intelligent apparatus, and is configured to: obtain a second control instruction sent by the preconfigured intelligent apparatus through the preconfigured communication device. The portable power supply is controlled, in response to the second control instruction, to charge or discharge.

In an embodiment, the portable power supply module only includes the portable power supply, and the portable power supply is arranged between the photovoltaic module and the power grid. It should be noted that the portable power supply itself establishes wireless communication connection with the preconfigured intelligent apparatus, thus controlling the portable power supply to charge or discharge.

In the embodiment of the present disclosure, the portable power supply is in communication connection with the intelligent apparatus, without any auxiliary device, through a communication function of the portable power supply to realize control over a state of the portable power supply.

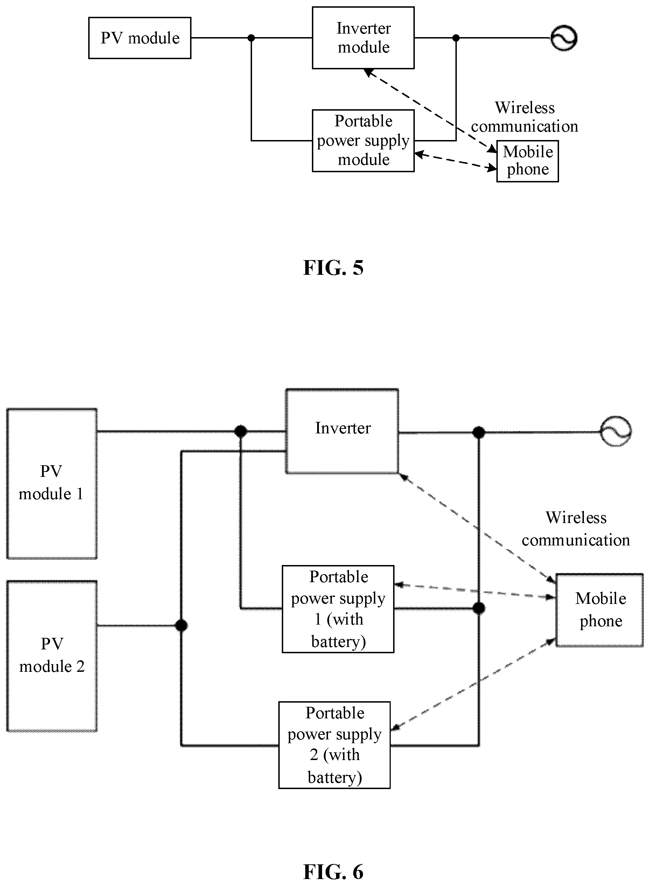

According to the above embodiments and the embodiment of the present disclosure, both the inverter and the portable power supply are in wireless connection with the preconfigured intelligent apparatus, to realize control over respective states of the inverter and the portable power supply, as shown in FIG. 5. The photovoltaic and energy storage system including the inverter and the portable power supply operates as listed in table 2. Table 2 also shows the relationship between the portable power supply and the inverter.

**Table 2**

| No. | Operating Mode | Inverter | Direct-current portable power supply | Alternating-current portable power supply |
|---|---|---|---|---|
| 1 | Charging using photovoltaic surplus power | 1 | 1 | 1 |
| 2 | Surplus power discharging ( photovoltaic module does not operate) does not operate | 1 | 1 | 1 |
| 3 | Only inverter connected to power grid | 1 | 0 | 1 |
| 4 | Grid connection and alternating-current charging of portable power supply | 1 | 0 | 1 |
| 5 | Off-grid charging | 1 | 1 | 0 |
| 6 | Off-grid charging of portable power supply | 0 | 1 | 0 |
| 7 | Grid-connected charging of portable power supply | 0 | 1 | 1 |
| 8 | Hybrid mode | - | - | - |

The operating modes are the same as those in table 1 and are not repeated in this embodiment.

It should be noted that 1 represents an on state and 0 represents an off state. The direct-current portable power supply and the alternating-current portable power supply are a direct-current module and an alternating-current module in the portable power supply, respectively.

It should be noted that in the photovoltaic and energy storage system, the quantity of the portable power supplies may be more than one, and the quantity of the photovoltaic modules may be more than one. The operating modes are identical with the operating modes described above when the quantity of the portable power supplies is more than one and the quantity of the photovoltaic modules is more than one. Each portable power supply and each inverter are in wireless communication with the preconfigured intelligent apparatus, as shown in FIG. 6.

In an embodiment, the portable power supply module includes the portable power supply arranged between the photovoltaic module and the power grid.

The portable power supply is in wireless communication connection with the preconfigured communication device in the inverter, and is configured to obtain a second control instruction sent by the preconfigured intelligent apparatus and forwarded by the inverter. The portable power supply is controlled, in response to the second control instruction, to charge or discharge.

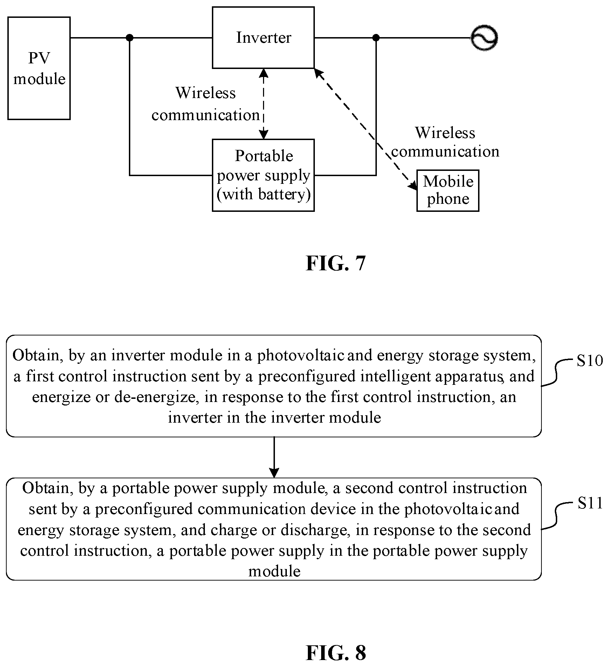

In an embodiment, as shown in FIG. 7, the portable power supply module only includes the portable power supply, and the portable power supply is arranged between the PV module and the power grid. It should be noted that the portable power supply itself establishes wireless communication connection with the inverter, thus controlling the portable power supply to charge or discharge.

In the embodiment of the present disclosure, the portable power supply is in communication connection with the inverter, without any auxiliary device, through a communication function of the portable power supply to realize control over a state of the portable power supply.

The photovoltaic and energy storage system is provided according to the present disclosure. The photovoltaic and energy storage system includes a photovoltaic module and a power grid. The photovoltaic and energy storage system further includes: an inverter module arranged between the photovoltaic module and the power grid, where the inverter module is in wireless communication connection with a preconfigured intelligent apparatus and is configured to obtain a first control instruction sent by the preconfigured intelligent apparatus, and the first control instruction is to control an inverter in the inverter module to be energized or de-energized; and a portable power supply module arranged between the photovoltaic module and the power grid and connected in parallel to the inverter module, where the portable power supply module is in wireless communication connection with a preconfigured communication device and is configured to obtain a second control instruction sent by the preconfigured communication device; where the second control instruction is to control a portable power supply in the portable power supply module to charge or discharge. By means of the wireless control instruction sent by the preconfigured intelligent apparatus or the preconfigured communication device, the scheduled charging and discharging of the inverter and the portable power supply can be achieved, improving user experience.

In the above embodiments, the photovoltaic and energy storage system is described in detail. A photovoltaic energy storage method for the photovoltaic and energy storage system is further provided according to embodiments of the present disclosure.

To solve the above problem, a photovoltaic energy storage method is provided according to the present disclosure. The method is applied to the photovoltaic and energy storage system. The method includes the following steps S10 and S11, as shown in FIG. 8.

In step S10, a first control instruction sent by a preconfigured intelligent apparatus is obtained by an inverter module in the photovoltaic and energy storage system, and an inverter in the inverter module is energized or de-energized in response to the first control instruction.

In S11, a second control instruction sent by a preconfigured communication device is obtained by a portable power supply module in the photovoltaic and energy storage system, and a portable power supply in the portable power supply module charges or discharges in response to the second control instruction.

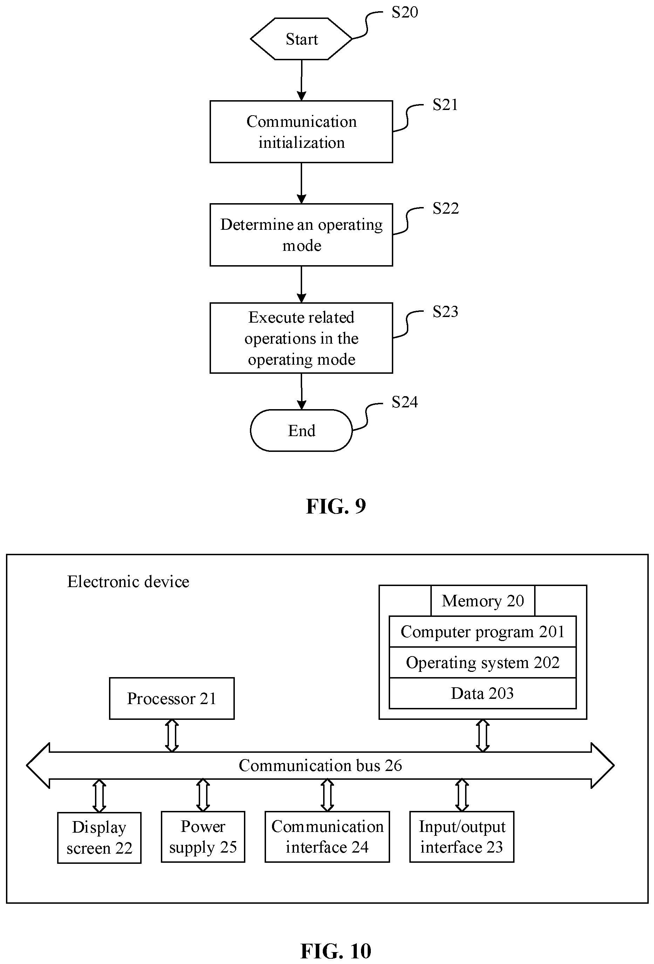

According to the above embodiments, the overall procedure of the photovoltaic energy storage method is shown in FIG. 9.
S20: Start.
S21: Communication initialization.
S22: Determine an operating mode.
S23: Execute related operations in the operating mode.
S24: End.

Since the embodiments of the method correspond to the embodiments of the system, the embodiments of the method may refer to the embodiments of the system, and thus are not repeated here.

FIG. 10 is a structural diagram of an electronic device according to another embodiment of the present disclosure. As shown in FIG. 10, the electronic device includes: a memory 20 and a processor 21.

The memory 20 is configured to store a computer program. The processor 21 is configured to perform, when executing the computer program, the photovoltaic energy storage method according to the above embodiments.

The electronic device according to the present embodiment may include, but is not limited to, a smartphone, a tablet computer, a laptop computer, a desktop computer or the like.

The processor 21 may include one or more cores, such as a 4-core processor and an 8-core processor. The processor 21 may adopt at least one hardware form of a Digital Signal Processor (DSP), a Field-Programmable Gate Array (FPGA), and a Programmable Logic Array (PLA). The processor 21 may include a main processor and a coprocessor. The main processor is configured to process data in an active state and is also referred to as a Central Processing Unit (CPU). The coprocessor is a low-power-consumption processor for processing data in a standby state. In some embodiments, the processor 21 is integrated with a Graphics Processing Unit (GPU). The GPU is configured to render and draw content to be displayed on a display screen. In some embodiments, the processor 21 may further include an Artificial Intelligence (AI) processor. The AI processor is configured to process computational operations related to machine learning.

The memory 20 may include one or more computer-readable storage media which may be non-transitory. The memory 20 may further include a high-speed random access memory and a non-volatile memory, such as one or more magnetic disk storage devices and one or more flash memory storage devices. In the embodiment, the memory 20 is at least configured to store the following computer program 201. The computer program is loaded and executed by the processor 21 to implement the photovoltaic and energy storage system and the photovoltaic energy storage method according to any one of the above embodiments. In addition, the memory 20 may further store an operating system 202, data 203 and other resources in a temporary manner or a permanent manner. The operating system 202 may include Windows, Unix, Linux and the like.

In some embodiments, the electronic device may further include a display screen 22, an input/output interface 23, a communication interface 24, a power supply 25 and a communication bus 26.

Those skilled in the art may understand that the structure shown in FIG. 10 does not constitute a limitation of the electronic device and the electronic device may include more or fewer components than shown.

The electronic device according to an embodiment of the present disclosure includes a memory and a processor. The processor performs, when executing a program stored in the memory, the photovoltaic energy storage method.

Finally, a computer-readable storage medium is provided according to an embodiment of the present disclosure. The computer-readable storage medium stores a computer program. The computer program performs, when executed by a processor, the photovoltaic energy storage method according to the above-described embodiments.

It should be understood that if the method in the above embodiments is implemented in a form of a software functional unit and is sold and used as an independent product, the software functional unit may be stored in a computer-readable storage medium. Based on such understanding, the technical solutions according to the present disclosure essentially or the part that contributes to the conventional technology, or all or a part of the technical solutions may be embodied in a form of a software product. The computer software product is stored in a storage medium and performs all or part of steps of the method described in the above embodiments of the present disclosure. The storage medium includes various media that can store program codes, such as a USB flash drive, a mobile hard disk, a read-only memory (ROM), a random access memory (RAM), a magnetic disk or an optical disk.

The photovoltaic and energy storage system and method, the electronic device and the medium according to the present disclosure are described in detail above. It should be noted that the embodiments in this specification are described in a progressive manner. Each of the embodiments focuses on differences with other embodiments, and the same or similar parts of the embodiments may be with reference to each other. Since the device disclosed in the embodiments corresponds to the method disclosed in the embodiments, the description for the device is simple, and reference may be made to the method in the embodiments for the relevant parts. It should be noted that, for those skilled in the art, various modifications and improvements may be made to the present disclosure without departing from the principle of the present disclosure, and these modifications and improvements fall into the protection scope of the present disclosure.

It should further be noted that relationship terms such as first, second and the like are only used herein to distinguish one entity or operation from another, instead of necessitating or implying such actual relationship or order between entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the series of elements.

## Claims

1. A photovoltaic and energy storage system, comprising a photovoltaic module and a power grid, wherein the photovoltaic and energy storage system further comprises:
an inverter module, arranged between the photovoltaic module and the power grid, wherein the inverter module is in wireless communication connection with a preconfigured intelligent apparatus and is configured to obtain a first control instruction sent by the preconfigured intelligent apparatus, wherein the first control instruction is to control an inverter in the inverter module to be energized or de-energized; and
a portable power supply module, arranged between the photovoltaic module and the power grid and connected in parallel to the inverter module, wherein the portable power supply module is in wireless communication connection with a preconfigured communication device and is configured to obtain a second control instruction sent by the preconfigured communication device, wherein the second control instruction is to control a portable power supply in the portable power supply module to charge or discharge.

2. The photovoltaic and energy storage system according to claim 1, wherein the inverter module comprises the inverter and further comprises a first intelligent switch, wherein
a terminal of the first intelligent switch is connected to an output terminal of the photovoltaic module, and another terminal of the first intelligent switch is connected to an input terminal of the inverter; and the first intelligent switch is in wireless communication connection with the preconfigured intelligent apparatus; and
the first intelligent switch is configured to:
obtain the first control instruction sent by the preconfigured intelligent apparatus;
connect, in response to the first control instruction, the photovoltaic module to the inverter; and
disconnect, in response to the first control instruction, the photovoltaic module from the inverter.

3. The photovoltaic and energy storage system according to claim 2, wherein the portable power supply module comprises the portable power supply and further comprises a second intelligent switch, wherein
a terminal of the second intelligent switch is connected to an output terminal of the photovoltaic module, and another terminal of the second intelligent switch is connected to an input terminal of the portable power supply; and the second intelligent switch is in wireless communication connection with the preconfigured communication device; and
the second intelligent switch is configured to:
obtain the second control instruction sent by the preconfigured communication device;
connect, in response to the second control instruction, the photovoltaic module to the portable power supply; and
disconnect, in response to the second control instruction, the photovoltaic module from the portable power supply;
wherein the preconfigured communication device is arranged in the preconfigured intelligent apparatus.

4. The photovoltaic and energy storage system according to any one of claims 1 to 3, further comprising a third intelligent switch, wherein
a terminal of the third intelligent switch is connected to an output terminal of the inverter and an output terminal of the portable power supply, and another terminal of the third intelligent switch is connected to an input terminal of the power grid; and the third intelligent switch is in wireless communication connection with the preconfigured intelligent apparatus; and
the third intelligent switch is configured to:
obtain a third control instruction sent by the preconfigured intelligent apparatus;
connect, in response to the third control instruction, the inverter and the portable power supply to the power grid; and
disconnect, in response to the third control instruction, the inverter and the portable power supply from the power grid.

5. The photovoltaic and energy storage system according to claim 1, wherein the inverter module comprises the inverter arranged between the photovoltaic module and the power grid, wherein
the inverter is in wireless communication connection with the preconfigured intelligent apparatus, and is configured to: obtain a first control instruction sent by the preconfigured intelligent apparatus, wherein the inverter is controlled, in response to the first control instruction, to be energized or de-energized.

6. The photovoltaic and energy storage system according to claim 5, wherein the portable power supply module comprises the portable power supply arranged between the photovoltaic module and the power grid, wherein
the portable power supply is in wireless communication connection with the preconfigured communication device in the preconfigured intelligent apparatus, and is configured to: obtain the second control instruction sent by the preconfigured intelligent apparatus through the preconfigured communication device, wherein the portable power supply is controlled, in response to the second control instruction, to charge or discharge.

7. The photovoltaic and energy storage system according to claim 5, wherein the portable power supply module comprises the portable power supply arranged between the photovoltaic module and the power grid, wherein
the portable power supply is in wireless communication connection with the preconfigured communication device in the inverter, and is configured to: obtain the second control instruction sent by the preconfigured intelligent apparatus and forwarded by the inverter, wherein the portable power supply charges or discharges in response to the second control instruction.

8. A photovoltaic energy storage method, applied to the photovoltaic and energy storage system according to any one of claims 1 to 8, comprising:
obtaining, by the inverter module in the photovoltaic and energy storage system, the first control instruction sent by the preconfigured intelligent apparatus; and energizing or de-energizing, in response to the first control instruction, the inverter in the inverter module; and
obtaining, by the portable power supply module in the photovoltaic and energy storage system, the second control instruction sent by the preconfigured communication device; and charging or discharging, in response to the second control instruction, the portable power supply in the portable power supply module.

9. An electronic device, comprising:
a memory, configured to store a computer program; and
a processor, configured to perform, when executing the computer program, the photovoltaic energy storage method according to claim 8.

10. A computer-readable storage medium, storing a computer program, wherein the computer program, when executed by a processor, performs the photovoltaic energy storage method according to claim 8.
